# EUROPEAN PATENT SPECIFICATION

(11) **EP 0 387 735 B1**
(45) Date of publication and mention of the grant of the patent: **23.08.1995**
(21) Application number: 90104594.8
(22) Date of filing: 10.03.1990
(51) Int. Cl.: H02M 1/14

(54) **Surge eliminator for switching converters**
Spannungsstoss-Sperreinrichtung für Schaltkonverter
Eliminateur de surtension transitoire pour convertisseur à commutation

(30) Priority: 14.03.1989 US 323580
(43) Date of publication of application: 19.09.1990
(73) Proprietor: Hughes Aircraft Company, Los Angeles, California 90045-0066 (US)
(72) Inventor: Washburn, Robert D., Malibu, Calfornia 90265 (US); Sze, Jerry C., San Francisco, California 94117 (US); Lusher, David M., Torrance, California 90504 (US); Gonzalez, Carlos H., La Mirada, California 90638 (US); McClanahan, Robert F., Valencia, California 91354 (US)
(74) Representative: Witte, Alexander, Dr.-Ing.

(56) References cited:
- DE-A- 2 423 775
- GB-A- 2 065 996
- PATENT ABSTRACTS OF JAPAN vol. 6, no. 155 (E-125)(1033) 17 August 1982 ; & JP-A-57 75 571
- Sovjet Inventions Illustrated, Section X12, week 8539, 8 Nov 1985, Derwent Publications Ltd., London, GB ; & SU-A-11 46 771

## Description

The disclosed invention is generally directed to rectifying power supplies, and is more particularly directed to a rectifying power supply which includes circuitry for reducing losses in the operation of the power rectifying diodes.

Rectifying power supplies are utilized in certain applications where the required supply voltage is DC. The originating power source may provide an AC voltage or a DC voltage. With a DC voltage supply, stepping the voltage up or down requires conversion of the DC power to AC power, which may be accomplished, for example, with a square wave converter or a sine wave converter. The AC power is then stepped up or stepped down as required, and then rectified and filtered.

The rectifying diodes used in rectifying power supplies continuously switch on and off in response to the AC power. As is well known, a diode does not instantaneously turn off, instead providing reverse current pursuant to reverse bias voltage to discharge stored charge. The resulting turn off or "recovery" reverse currents result in equivalent I²R power dissipation in the diodes, and current surges or spikes at the inputs to the rectifiers. The current surges or spikes reflect back to the AC power source as a heavier load, which causes higher current stresses on the semiconductor switching devices of the AC power source.

It has been determined that power dissipation and the magnitudes of the current surges or spikes due to diode recovery increase with increased forward current, and also increase with increased AC operating frequency. With increased AC operating frequencies, the voltage slew rate increases and reverse bias voltages increase more rapidly, which results in greater peak reverse currents.

Diode recovery time power dissipation and current surges or spikes are important considerations in high frequency power supplies. While significant improvements in the size and weight of rectifying power supplies have been made by increasing the operating frequency of the AC power, the recovery characteristics of known rectifier diodes results in reduced efficiency and increased component stress at higher frequencies. At some point, the rectifying diodes simply fail.

Document GB-A-2 065 996 discloses a rectifier circuit for driving gas discharge lamps. The lamps are driven with DC superimposed by a small 20 kHz component and generate considerable hormonics of the mains frequency which, when coupled back to the main lines, cause radio interference. In order to reduce such radio interference, several filters between the AC source and the rectifier are disclosed. One of the circuits shown in this document depicts an LC filter in one of the lines connecting a sinusoidal AC source with the full-wave rectifier.

In view of the prior art discussed above it is an object of the present invention to provide a rectifying power supply having improved efficiency at higher operating frequencies.

It is a further object to provide a rectifying power supply which substantially reduces current surges or spikes caused by diode recovery reverse currents.

According to the invention this object is achieved by a power supply, comprising:
- a source of AC power;
- inductive filter means responsive to said AC power for providing a filtered AC signal; and
- rectifying diodes for rectifying said filtered AC signal to provide a DC output voltage,
- said inductive filter means being configured to limit the current surges or spikes caused by diode turn off recovery close to current peaks due only to forward biased diode current, whereby
- increased operating efficiency is achieved, and higher AC operating frequencies can be utilized since the I²R dissipation in the rectifying diodes is reduced.

It is one advantage of the invention to provide a rectifying power supply which has an AC operating frequency of greater than 1 MHz and provides for efficient operation.

The foregoing and other features are provided in a power supply which includes circuitry for providing AC power, inductive filter circuitry responsive to the AC power, and rectifying circuitry, whereby the inductive filter circuitry reduces the current surges or spikes caused by diode turn off recovery.

The advantages and features of the disclosed invention will readily be appreciated by persons skilled in the art from the following detailed description when read in conjunction with the drawing wherein:

FIG. 1 is a schematic of a rectifying power supply in accordance with the invention wherein the AC power is generally sinusoidal.

FIG. 2 is a schematic of a rectifying power supply in accordance with the invention wherein the AC power is a square wave.

FIG. 3 is a schematic diagram of rectifier/filter module which can be used with the power supplies of FIGS. 1 and 2.

FIGS. 4A and 4B illustrate current waveforms that are helpful in understanding the power supply of FIG. 1.

FIG. 5 illustrates a current waveform that is helpful in understanding the power supply of FIG. 2.

In the following detailed description and in the several figures of the drawing, like elements are identified with like reference numerals.

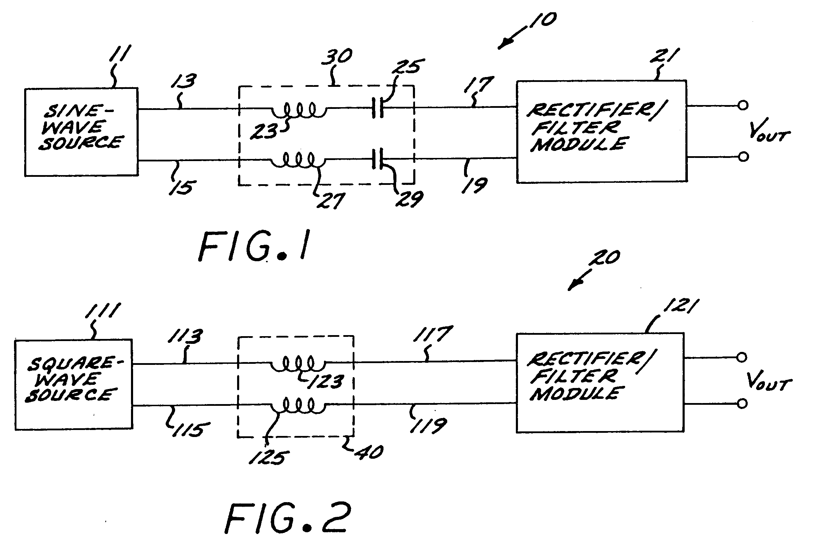

Referring now to FIG. 1, illustrated therein is a rectifying power supply 10 which includes a sinewave source 11 which, by way of example, can comprise known circuitry for converting a DC voltage to an AC voltage that varies sinusoidally. The output of the sinewave source 11 is coupled via output lines 13, 15 to a balanced filter circuit 30, which provides its output via lines 17, 19 to a rectifier/filter module 21. The rectifier/filter module 21 can be of conventional design for providing full wave rectification and filtering to produce a DC output voltage Vₒᵤₜ.

The filter circuit 30 includes a first LC bandpass filter comprising an inductor 23 and a capacitor 25 which are serially coupled between the output line 13 and the line 17. The resonant circuit 30 further includes a second LC bandpass filter comprising an inductor 27 and a capacitor 29 which are serially coupled between the output line 15 and the line 19. For balance between the two AC outputs provided by the sinewave source 11, the inductors 23, 27 have the same value, while the capacitors 25, 29 have the same value. Further, the inductors 23, 27 can also have a common core.

The loaded Q of each of the LC bandpass filters in the filter circuit 30 is typically in the range of about 0.7 to 5. A procedure for selecting the component values of the LC bandpass filters, and an example of operating parameters and component values are set forth further herein.

Although the filter circuit 30 is shown as a balanced filter circuit, it is also possible to use an unbalanced filter circuit, for example, wherein one of the AC outputs is coupled to a bandpass filter while the other is not. However, the use of an unbalanced filter may be unsatisfactory in situations where effects of parasitic components are significant, for example, at higher frequencies. Specifically, at high frequencies, the level of high frequency noise resulting from an imbalanced filter network may be unacceptable.

Referring now to FIG. 2, illustrated therein is a rectifying power supply 20 which includes a square wave source 111, which, by way of example, can comprise known circuitry for converting a DC voltage to an AC voltage that varies as a square wave. The output of the square wave source 111 is coupled via output lines 113, 115 to a balanced filter circuit 40, which provides its output via lines 117, 119 to a rectifier/filter module 21. The rectifier/filter module 121 can be of conventional design for providing full wave rectification and filtering to produce a DC output voltage Vₒᵤₜ.

The filter circuit 40 includes an inductor 123 coupled between the output line 113 and the line 117. Another inductor 125 is coupled between the output line 115 and the line 119. For balance, the inductors 123, 125 have the same value, and can share a common core.

Unlike the power supply 10 of FIG. 1, the filter 40 of the power supply 20 does not include capacitors since the AC voltage provided by the square wave source 111 includes flat or DC components.

Although the filter circuit 40 is shown as a balanced filter circuit, it is also possible to use an unbalanced filter circuit, for example, wherein one of the AC outputs is coupled to an inductor while the other is not. As with the power supply 10 of FIG. 1, an unbalanced filter may be unsatisfactory in situations where effects of parasitic components are significant, for example, at higher frequencies where the resulting high frequency noise may be unacceptable.

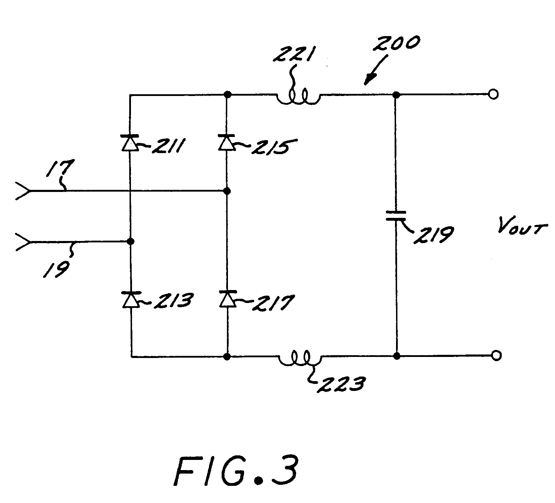

Referring now to FIG. 3, illustrated therein is a schematic of a rectifier/filter module 200 which may be utilized as the rectifier/filter modules 21, 121 in the power supplies 10, 20 of FIGS. 1 and 2. Specifically, the rectifier/filter module 200 includes a first pair of serially connected rectifier diodes 211, 213 in parallel with a second pair of serially connected rectifier diodes 215, 217. A pair of balanced inductors 221, 223 are connected in series with the diode pairs, and function to ensure continuous operation of the diodes 211, 213, 215, 217. A smoothing capacitor 219 is connected in series with the balanced inductors 221, 223. The output Vₒᵤₜ of the rectifier/filter module 200 is across the smoothing capacitor 219.

In the foregoing filter circuits 30, 40, it is believed that inductors function to reduce the current spikes or surges due to reverse conduction of the reverse biased diodes of the rectifier/filter modules, which reduces the I²R losses in such diodes and reduces the current loads imposed on the AC source by diode recovery. Specifically, without the filter circuits 30, 40, the peak reverse current of a reverse biased diode, which appears as a spike superimposed on the current due to the associated forward biased diode, can be excessively high. The peak reverse current when multiplied by the reverse resistance of a reverse conducting diode causes high dissipation at high frequencies. As the operating frequency is increased, the period over which peak reverse current occurs represents a larger portion of the operating cycle, which leads to higher power dissipation in the rectifier diodes.

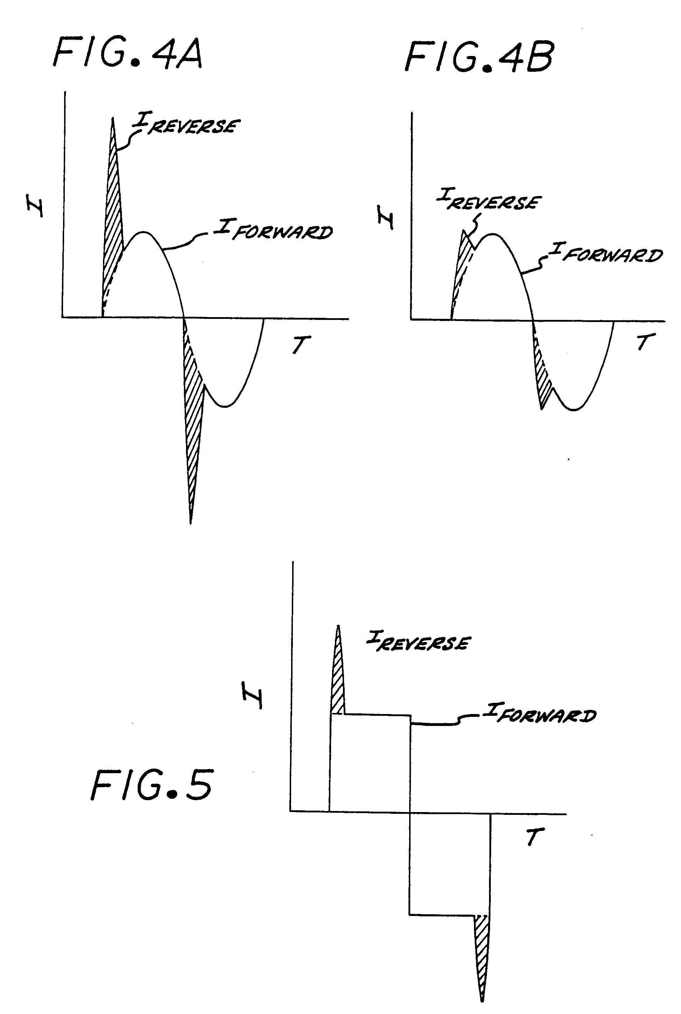

FIG. 4A schematically illustrates, for the power supply 10 of FIG. 1, one cycle of what the current would be on one of the lines 17, 19 without the surge eliminating filter 30. The current includes both the forward current due to a forward biased rectifier diode and the reverse current due to the associated reverse biased rectifier diode, such reverse current appearing as a spike superimposed on the forward current. It should be appreciated that the actual relative levels of the forward and reverse currents will differ for different rectifier diode specifications. The current waveform on the other of the lines 17, 19 would be substantially identical but 180 degrees out of phase.

FIG. 4B schematically illustrates, for the power supply 10 of FIG. 1, one cycle of the current on one of the lines 17, 19 with the surge eliminating filter 30, and also includes both the forward current due to the forward biased diode and the reverse current due to the associated reverse biased diode. The current waveform on the other of the lines 17, 19 would be substantially identical but 180 degrees out of phase.

FIG. 5 illustrates, for the power supply 20 of FIG. 2, one cycle of what the current would be on one of the lines 117, 119 without the surge eliminating filter 40. The current includes both the forward current due to a forward biased rectifier diode and the reverse current due to the associated reverse biased rectifier diode, such reverse current appearing as a spike superimposed on the forward current. It should be appreciated that the actual relative levels of the forward and reverse currents will differ for different rectifier diode specifications. The current waveform on the other of the lines 117, 119 would be substantially identical but 180 degrees out of phase.

As a result of reducing the current peaks due to reverse diode conduction, increased operating efficiency is achieved, and higher AC operating frequencies can be utilized since the I²R dissipation in the rectifying diodes is reduced. While reduction of the recovery current peaks results in longer diode recovery time, which in turn imposes an upper limit on the AC operating frequency, such upper limit is greater than the upper limit without the filter circuits. In order to increase operating frequency, diode recovery time can be reduced by decreasing the forward diode currents since the stored charge is a function of forward current.

The component values of the surge eliminator filter circuits 30, 40 are generally chosen to limit the current spikes, for example measured on the input lines to the rectifier/filter modules 21, 121, to levels below that which would lead to thermal runaway of the rectifier diodes under anticipated current load conditions.

By way of specific example, an iterative test procedure can be utilized to select the desired inductive and capacitive components for the filter circuit 30 of FIG. 1. An inductor is chosen such that the interwinding capacitance of the physical device together with the inductor value does not cause a resonance at a frequency within an order of magnitude of the AC operating frequency. The capacitor value is selected to provide a resonant frequency of the L-C circuit that is equal to the AC operating frequency. The power supply is then tested to observe current at the lines 17, 19. If the current spikes (which include reverse biased diode current) are greater than the current peaks due only to forward biased diode current, the inductor value is increased, the capacitor value is changed accordingly to maintain the desired resonant frequency, and the power supply is again tested. This procedure is repeated as necessary to obtain current spikes which are close to the current peaks due only to forward biased diodes, as illustrated in FIG. 4B.

As to the inductors of FIG. 2, they are similarly selected by an iterative procedure to reduce the current spikes on the lines 117, 119 to levels that avoid thermal runaway of the rectifier diodes. For example, a relatively large inductor might initially be used, and then progressively smaller inductors would be used until the appropriate current spike or surge level is achieved.

The following are examples of operating parameters and component values for the power supply 10 of FIG. 1 utilizing the rectifier/filter module 200 of FIG. 3, where Fₛ is the frequency of the output of the sinewave source 11:
- Fₛ:: 1.1 MHz
- Inductors 23, 27:: 55 microhenrys
- Capacitors 25, 29:: 410 picofarads
- Diodes 211,213,215,217:: Solid State Devices Inc. SPD524

The LC filter in the foregoing example has a loaded Q of less than 10.

The foregoing has been a disclosure of a power supply which provides advantages including increased operating efficiency and increased AC operating frequencies. By way of example, operating frequencies of about 1 MHz are readily utilized, and still higher frequencies can be utilized by reducing the peak forward currents in the rectifying diodes. Still further advantages include reduced loading of the AC source and reduced transients.

## Claims

1. A power supply, comprising:
- a source of AC power (11; 100);
- inductive filter means responsive to said AC power for providing a filtered AC signal; and
- rectifying diodes (211-217) for rectifying said filtered AC signal to provide a DC output voltage,
- said inductive filter means being configured to limit the current surges or spikes caused by diode turn off recovery close to current peaks due only to forward biased diode current, whereby
- increased operating efficiency is achieved, and higher AC operating frequencies can be utilized since the I²R dissipation in the rectifying diodes (211-217) is reduced.

2. The power supply of claim 1, characterized in that said source (11; 111) of AC power includes two output lines (13, 15; 113, 115) and wherein said inductive filter means comprises a balanced filter (30; 40).

3. The power supply of claim 1, characterized in that said balanced filter (30; 40) includes first and second inductors (23, 27; 123, 125) respectively coupled between said output lines (13, 15; 113, 115) and said rectifying diodes (211-217).

4. The power supply of claim 3, characterized in that said first and second inductors (23, 27; 123, 125) are wound on a common core.

5. The power supply of claim 3 or 4, characterized in that said source of AC power comprises a sinewave source (11), and wherein said balanced filter (30) further includes first and second capacitors (25, 29) respectively coupled in series with said first and second inductors (23, 27).

6. The power supply of claim 5, characterized in that said first and second inductors (23, 27) have the same value, and wherein said first and second capacitors (25, 29) have the same value.

7. The power supply of claim 5 or 6, characterized in that respectively (a) said first inductor (23) and said first capacitor (25), and (b) said second inductor (27) and said second capacitor (29) have a resonant frequency substantially equal to the operating frequency of said AC source (11).

8. The power supply of claim 3 or 4, characterized in that said AC source includes a square wave source (111).

9. The power supply of any of claims 1 through 8, characterized in that said inductive filter means includes an inductor (23, 27; 123, 125) serially coupled between said AC source (11; 111) and said rectifying diodes (211-217).

10. The power supply of claim 9, characterized in that said AC source comprises a sinewave source (11) and further including a capacitor (25, 29) in series with said inductor (23, 27).

11. The power supply of claim 10, characterized in that said inductor (23, 27) and capacitor (25, 29) have a resonant frequency substantially equal to the operating frequency of said AC source (11).

12. The power supply of any of claims 1-11, characterized in that the source of AC power has an AC operating frequency of about 1 MHz or greater.

## Patentansprüche

1. Netzgerät, mit:
- einer Quelle (11) für Wechselstromleistung (100),
- induktiven Filtermitteln, die in Abhängigkeit von der Wechselstromleistung ein gefiltertes Wechselstromsignal liefern, und
- Gleichrichterdioden (211-217), um das gefilterte Wechselstromsignal gleichzurichten und eine Ausgangsgleichspannung zu liefern,
- wobei die induktiven Filtermittel so aufgebaut sind, daß sie durch Dioden-Ausschalterholung bewirkte Stromstöße oder -spitzen auf solche begrenzen, die in der Nähe von Stromspitzen liegen, die sich allein aus dem Diodenstrom in Durchlaßrichtung ergeben, wodurch
- ein erhöhter Betriebswirkungsgrad erreicht wird und höhere Wechselstrom-Betriebsfrequenzen verwendet werden können, da die I²R-Verlustleistung in den Gleichrichterdioden (211-217) verringert wird.

2. Netzgerät nach Anspruch 1, dadurch gekennzeichnet, daß die Quelle (11) für Wechselstromleistung (111) zwei Ausgangsleitungen (13, 15; 113, 115) umfaßt, wobei die induktiven Filtermittel ein symmetriertes Filter (30; 40) umfassen.

3. Netzgerät nach Anspruch 1, dadurch gekennzeichnet, daß das symmetrierte Filter (30; 40) erste und zweite Spulen (23, 27; 123, 125) umfaßt, die jeweils zwischen die Ausgangsleitungen (13, 15; 113, 115) und die Gleichrichterdioden (211-217) gekoppelt sind.

4. Netzgerät nach Anspruch 3, dadurch gekennzeichnet, daß die erste und die zweite Spule (23, 27; 123, 125) auf einen gemeinsamen Kern gewickelt sind.

5. Netzgerät nach Anspruch 3 oder 4, dadurch gekennzeichnet, daß die Quelle für Wechselstromleistung eine Sinuswellenquelle (11) umfaßt, wobei das symmetrierte Filter (30) weiter einen ersten und einen zweiten Kondensator (25, 29) umfaßt, der jeweils in Reihe mit der ersten bzw. zweiten Spule (23, 27) gekoppelt ist.

6. Netzgerät nach Anspruch 5, dadurch gekennzeichnet, daß die erste und die zweite Spule (23, 27) denselben Wert aufweisen, und daß der erste und der zweite Kondensator (25, 29) denselben Wert haben.

7. Netzgerät nach Anspruch 5 oder 6, dadurch gekennzeichnet, daß jeweils (a) die erste Spule (23) und der erste Kondensator (25) bzw. (b) die zweite Spule (27) und der zweite Kondensator (29) eine Resonanzfrequenz aufweisen, die im wesentlichen gleich der Betriebsfrequenz der Wechselspannungsquelle (11) ist.

8. Netzgerät nach Anspruch 3 oder 4, dadurch gekennzeichnet, daß die Quelle für Wechselstromleistung eine Rechteckwellenquelle (111) umfaßt.

9. Netzgerät nach einem der Ansprüche 1 bis 8, dadurch gekennzeichnet, daß die induktiven Filtermittel eine Spule (23, 27; 123, 125) umfassen, die in Reihe zwischen die Quelle (11) für Wechselstromleistung (111) und die Gleichrichterdioden (211-217) geschaltet ist.

10. Netzgerät nach Anspruch 9, dadurch gekennzeichnet, daß die Quelle für Wechselstromleistung eine Sinuswellenquelle (11) umfaßt und weiter einen Kondensator (25, 29) in Reihe mit der Spule (23, 27) beinhaltet.

11. Netzgerät nach Anspruch 20, dadurch gekennzeichnet, daß die Spule (23, 27) und der Kondensator (25, 29) eine Resonanzfrequenz aufweisen, die im wesentlichen gleich der Betriebsfrequenz der Quelle (11) für Wechselstromleistung ist.

12. Netzgerät nach einem der Ansprüche 1 bis 11, dadurch gekennzeichnet, daß die Quelle für Wechselstromleistung eine Wechselstrombetriebsfrequenz von ungefähr 1 MHz oder größer aufweist.

## Revendications

1. Alimentation électrique, comprenant:
- une source de puissance à courant alternatif (11; 100);
- un moyen à filtre inductif répondant audit courant alternatif en fournissant un signal de courant alternatif filtré; et
- des diodes (211-217) de redressement pour redresser ledit signal de courant alternatif filtré et fournir une tension de sortie à courant continu,
- ledit moyen de filtrage inductif étant configuré pour limiter les surintensités ou pointes de courant provoquées par le recouvrement après blocage de la diode à proximité des pics de courant qui ne sont dus qu'à un courant de diode direct, de sorte que:
- un rendement de fonctionnement accru est obtenu, et des fréquences de fonctionnement en courant alternatif plus élevées peuvent être utilisées étant donné que la dissipation en I²R dans les diodes (211-217) de redressement est réduite.

2. Alimentation électrique selon la revendication 1, caractérisée en ce que ladite source (11; 111) de puissance à courant alternatif comporte deux lignes (13, 15; 113, 115) de sortie et dans laquelle ledit moyen de filtrage inductif comprend un filtre (30; 40) équilibré.

3. Alimentation électrique selon la revendication 1, caractérisée en ce que ledit filtre (30; 40) équilibré comporte des première et seconde inductances (23, 27; 123, 125) respectivement couplées entre lesdites lignes (13, 15; 113, 115) de sortie et lesdites diodes (211-217) de redressement.

4. Alimentation électrique selon la revendication 3, caractérisée en ce que lesdites première et seconde inductances (23, 27; 123, 125) sont enroulées sur un noyau commun.

5. Alimentation électrique selon la revendication 3 ou 4, caractérisée en ce que ladite source de puissance à courant alternatif comprend une source (11) sinusoïdale et dans laquelle ledit filtre (30) équilibré comporte en outre des premier et second condensateurs (25, 29) respectivement couplés en série auxdites première et seconde inductances (23, 27).

6. Alimentation électrique selon la revendication 5, caractérisée en ce que lesdites première et seconde inductances (23, 27) ont la même valeur, et dans laquelle lesdits premier et second condensateurs (25, 29) ont la même valeur.

7. Alimentation électrique selon la revendication 5 ou 6, caractérisée en ce que respectivement (a) ladite première inductance (23) et ledit premier condensateur (25) et (b) ladite seconde inductance (27) et ledit second condensateur (29) ont une fréquence de résonance sensiblement égale à la fréquence de fonctionnement de ladite source (11) de courant alternatif.

8. Alimentation électrique selon la revendication 3 ou 4, caractérisée en ce que ladite source de courant alternatif comporte une source (111) de signal rectangulaire.

9. Alimentation électrique selon l'une quelconque des revendications 1 à 8, caractérisée en ce que le moyen de filtrage inductif comporte une inductance (23, 27; 123, 125) reliée en série entre ladite source (11; 111) de courant alternatif et lesdites diodes (211-217) de redressement.

10. Alimentation électrique selon la revendication 9, caractérisée en ce que ladite source de courant alternatif comprend une source (11) sinusoïdale et comporte en outre un condensateur (25, 29) en série avec ladite inductance (23, 27).

11. Alimentation électrique selon la revendication 10, caractérisée en ce que ladite inductance (23, 27) et ledit condensateur (25, 29) ont une fréquence de résonance sensiblement égale à la fréquence de fonctionnement de ladite source (11) de courant alternatif.

12. Alimentation électrique selon l'une quelconque des revendications 1-11, caractérisée en ce que la source de puissance à courant alternatif a une fréquence de fonctionnement en courant alternatif d'environ 1 MHz ou davantage.
